# EUROPEAN PATENT APPLICATION

(11) **EP 1 550 822 A1**
(43) Date of publication of application: **06.07.2005**
(21) Application number: 03807960.4
(22) Date of filing: 22.08.2003
(51) Int. Cl.: F16K 35/02, F16K 35/06

(54) **LOCK DEVICE FOR FLOW PASSAGE OPENING/CLOSING HANDLE OF FLUID CONTROLLER**

(30) Priority: 10.10.2002 JP 2002297194
(71) Applicant: Fujikin Incorporated, Osaka-shi, Osaka 550-0012 (JP)
(72) Inventor: MAEDA, Hirokatsu, c/o FUJIKIN INCORPORATED, Osaka-shi, Osaka 550-0012 (JP); DAIDO, Kunihiko, c/o FUJIKIN INCORPORATED, Osaka-shi, Osaka 550-0012 (JP); YAMAJI, Michio, c/o FUJIKIN INCORPORATED, Osaka-shi, Osaka 550-0012 (JP)
(74) Representative: Paul, Dieter-Alfred, Dipl.-Ing.
(86) International application number: PCT/JP2003/010606
(87) International publication number: WO 2004/033946

(57) **Abstract**

A stopper support member 12 has a rectangular plate 15 provided with a circular through hole 16 for a cylinder 7 of a fluid controller body 2 to be fittingly inserted therethrough, a downward projection 17 provided at lengthwise one end of the rectangular plate 15 and held in contact with one side wall of a rectangular parallelepipedal portion 4 of the controller body 2, and an extension 15a extending outward from the plate 15 beyond the parallelepipedal portion 4. A stopper 13 in the form of a vertical plate is upwardly or downwardly movably inserted through a hole 18 formed in the extension 15a of the support member 12. The stopper 13 has a contact portion 19 movable into contact with the knob 3a of the handle 3 from outside widthwise of the knob when the stopper is in a locking position and a lock attaching portion 20 positioned above the support member 12 when the stopper is in the locking position.

## Description

### TECHNICAL FIELD

The present invention relates to a device for locking the channel opening-closing handle of fluid controllers, such as shutoff valves for use in semiconductor manufacturing apparatus, in its fully opening or fully closing position.

### BACKGROUND ART

The publication of JP-A No. 11-6581 discloses a lock device of the type mentioned for a channel opening-closing handle. The disclosed device comprises a stopper support member fixed to a fluid controller body, and a stopper supported by the support member and upwardly or downwardly movable between an upper position, i.e., locking position, for restraining a flat channel opening-closing handle by engagement therewith and a lower position, i.e., unlocking position, permitting the turn of the handle.

With the handle lock device disclosed in the above publication, the stopper comprises two members, and the device comprises many components and requires much time and labor for installation on the fluid controller. Thus, the lock device still remains to be improved.

An object of the present invention is to provide a channel opening-closing handle lock device which comprises a stopper in the form of a single member and which is reduced in the number of components and easy to mount on fluid controllers.

### DISCLOSURE OF THE INVENTION

The present invention provides a lock device for a channel opening-closing handle of a fluid controller, the lock device comprising a stopper support member fixed to a controller body and a stopper supported by the support member and upwardly or downwardly movable between a locking position for restraining the handle having a flat knob by engagement with the handle and an unlocking position permitting the turn of the handle, the lock device being characterized in that the controller body has a rectangular parallelepipedal portion, a projecting cylinder provided on an upper wall of the parallelepipedal portion and having the handle removably attached to an upper end thereof, and a male screw portion provided around the cylinder, the support member having a rectangular plate provided with a circular through hole for the cylinder of the controller body to be fittingly inserted therethrough, a downward projection provided at lengthwise one end of the rectangular plate and held in contact with one side wall of the parallelepipedal portion of the controller body, and an extension extending outward from the plate beyond the parallelepipedal portion, the stopper being in the form of a vertical plate and upwardly or downwardly movably inserted through a hole formed in the extension of the support member, the stopper having a contact portion movable into contact with the handle knob from outside widthwise of the knob when the stopper is in the locking position and a lock attaching portion positioned above the support member when the stopper is in the locking position.

The support member extension is provided, for example, at the other end of the rectangular plate where the downward projection is not formed. In this case, the stopper inserting hole is formed in a corner of the extension. Preferably this hole is then positioned externally of the width of the handle knob when seen from above. In this case, the stopper contact portion is a side face of the vertical plate providing the stopper. The stopper extension can be provided alternatively at a portion of the rectangular plate which portion is orthogonal to the plate portion provided with the downward projection.

With the lock device of the invention for the channel opening-closing handle of the fluid controller, the stopper restrains the handle from turning by engagement therewith. This eliminates the likelihood that the opening-closing handle will be shifted in position inadvertently, preventing such an accident that the fluid will not be passed through the controller properly to adversely affect the product to be obtained. Since a single plate provides the stopper, the lock device can be reduced in the number of components, while the stopper can be mounted on the controller body merely by fitting the stopper support member around the cylinder and tightening up a nut. Thus, the device can be mounted on the fluid controller easily, utilizing the construction of the controller advantageously.

### BRIEF DESCRIPTION OF THE DRAWINGS

FIG. 1 is a side elevation showing the appearance of a fluid controller and a fluid opening-closing handle lock device embodying the invention;
FIG. 2 is a plan view of the same;
FIG. 3 is a front view of the same;
FIG. 4 includes views showing a stopper, (a) showing the same as it is seen from the front, (b) being a view in section taken along the line b-b in (a); and
FIG. 5 includes views showing a stopper support member, (a) being a front view, (b) being a view in section taken along the line b-b in (a).

### BEST MODE OF CARRYING OUT THE INVENTION

An embodiment of the invention will be described below with reference to the drawings.

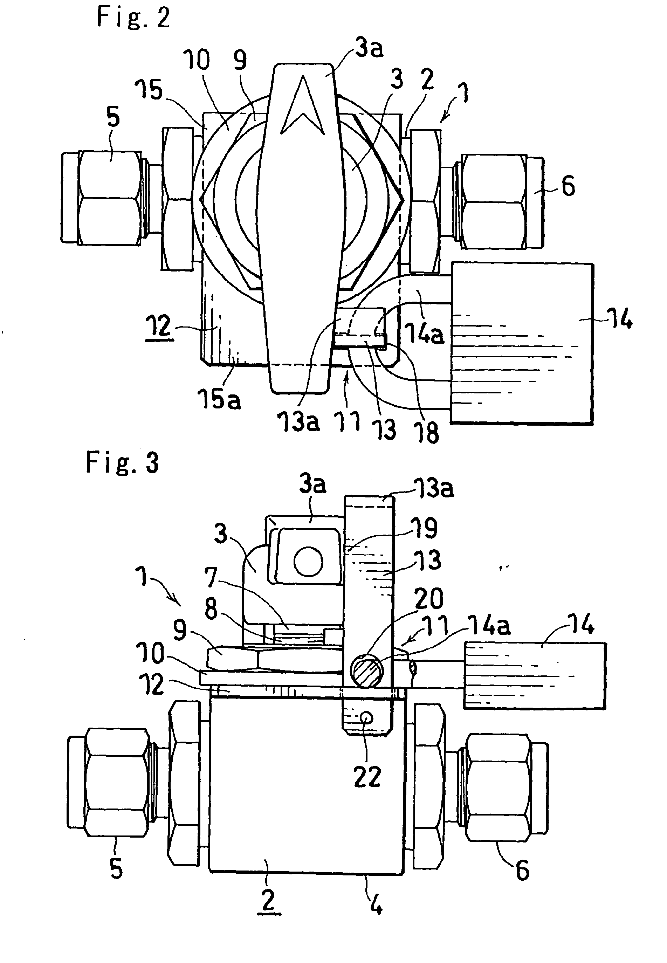

In the following description, the left- and right-hand sides of FIGS. 2 and 3 will be referred to as "left" and "right, " respectively, and the lower side of FIG. 2 as "front," and the upper side thereof as "rear."

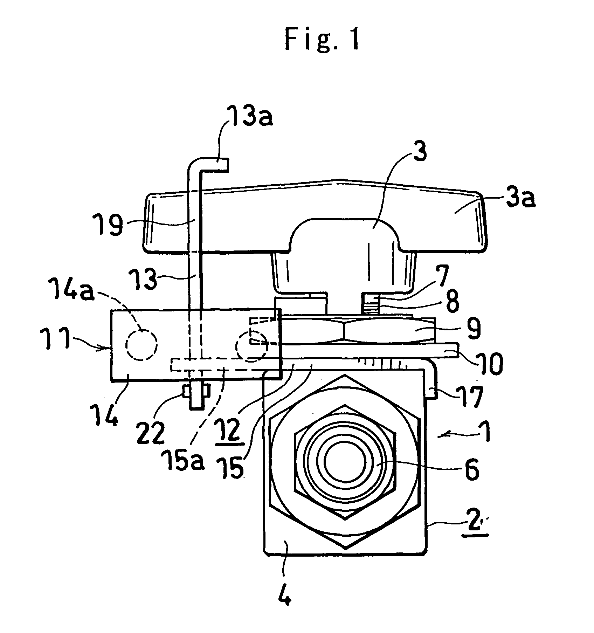

FIGS. 1 to 3 show a fluid controller 1, and a channel opening-closing handle lock device 11 of the invention.

The illustrated fluid controller 1 is a known two-way ball valve and comprises a controller body 2 and a channel opening-closing handle 3 having a flat knob 3a. The controller body 2 has a rectangular parallelepipedal portion 4 provided with an inlet pipe joint 5 and an outlet pipe joint 6, a projecting cylinder 7 provided on the top wall of the portion 4 and having the handle 3 attached to its upper end, and a tubular male screw portion 8 provided around the cylinder 7.

The inlet pipe joint 5 projects leftward from the rectangular parallelepipedal portion 4, with the outlet pipe joint 6 projecting rightward from this portion 4. The knob 3a of the handle 3 has a generally rectangular shape when seen from above. When the channel is fully opened, the knob 3a is positioned in the left-right direction in alignment with both the inlet pipe joint 5 and the outlet pipe joint 6. When the handle 3 is turned clockwise from this position through 90 degrees as it is seen from above, the handle 3 is positioned to fully close the channel.

The handle lock device 11, which is adapted to prevent the handle 3 in the fully closing position from turning toward an opening direction (counterclockwise direction when seen from above with the present embodiment), comprises a stopper support member 12 fixed to the controller body 2, a stopper 13 supported by the support member 12 and movable upward to an upper position in which the stopper 13 is in engagement with the handle 3 for the prevention of turn thereof, i.e., to a locking position, or downward to a lower position permitting the turn of the handle 3, i.e., to an unlocking position, and a lock 14 for which a key is held only by a person who can disengage the stopper 13.

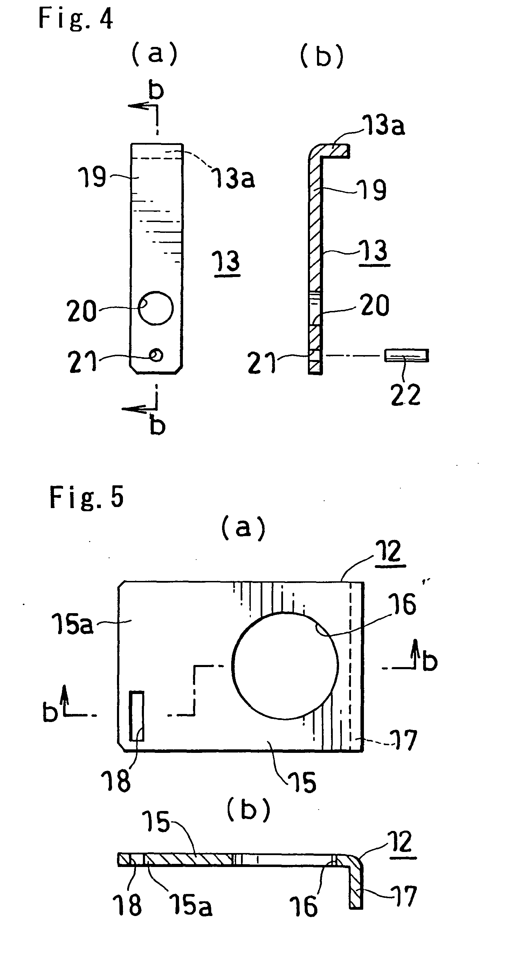

As shown in FIGS. 1 to 3 and FIG. 5, the stopper support member 12 comprises a rectangular plate 15 having a circular through hole 16 for the cylinder 7 of the controller body 2 to be fittingly inserted therethrough, a downward projection 17 provided at lengthwise one end (i.e., the right end in the present embodiment) of the plate 15 and held in contact with one side wall (i.e., the rear side wall according to the embodiment) of the rectangular parallelepipedal portion 4 of the controller body 2, and an extension 15a extending outward from the plate 15 beyond the portion 4. The extension 15a of the support member 12 is provided at a corner thereof with a rectangular through hole 18 so as to be positioned externally of the width of the knob 3a of the handle 3 when seen from above. The downward projection 17 is formed, for example, by bending the lengthwise end portion of the plate 15, but may of course be formed alternatively by a method other than bending.

The stopper support member 12 is secured to the rectangular parallelepipedal portion 4 of the controller body 2 with a nut 9 screwed on the male screw portion 8 of the controller body 2, with a holding ring 10 interposed between the nut 9 and the portion 4.

The stopper 13, which is in the form of a rectangular plate, is upwardly or downwardly movably inserted through the rectangular hole 18 formed in the corner of the extension 15a of the support member 12.

As shown in FIGS. 1 to 4, the stopper 13 is a vertically elongated rectangular plate and has a horizontal lug 13a projecting rearward from a top portion thereof which is positioned above the knob 3a of the handle 3. When the stopper 13 is moved down, the horizontal lug 13a comes into contact with the upper surface of the stopper support member 12, restraining the stopper 13 from moving further downward. The portion of the stopper 13 slightly below the lug 13a serves as a contact portion 19 which comes into contact with the knob 3a of the handle 3 from outside widthwise of the knob 3a when the stopper 13 is in its locking position. A through hole 20 is formed in the stopper 13 at a portion thereof close to its lower end and positioned above the support member 12 when the stopper 13 is in the locking position, the hole 20 serving as a lock attaching portion. The stopper 13 has a through hole 21 having a small diameter and positioned below the hole 20. Unremovably fitted into the hole 21 is a pin 22 for preventing the stopper 13 from slipping off from support member 12 when the lock 14 is removed. Although the horizontal lug 13a of the stopper 13 is formed by bending an upper end portion of the rectangular plate, the lug may of course be formed by a method other than bending.

The lock 14 is attached to the portion of the stopper 13 defining the lock attaching through hole 20 for preventing the stopper 13 from slipping off. For example, a padlock is usable as the lock 14. A shackle 14a is inserted through the hole 20 and placed into a bore in the lock 14, whereby the stopper 13 is restrained from moving down. Further with the pin 22 preventing the stopper 13 from moving upward, the stopper 13 is held in the locking position while being prevented from turning. Consequently, it is impossible to turn the channel opening-closing handle 3 unless the lock 14 is removed using the key.

The fluid controller 1 and the handle lock device 11 can be assembled by fitting the stopper support member 12 as positioned in a specified direction around the cylinder 7 of the controller body 2, securing the member 12 to the body 2 with the nut 9 and thereafter mounting the handle 3 in the fully closing position. The handle 3 can then be made lockable when in the fully closing position as mentioned above. When the nut 9 is tightened up with the stopper support member 12 rotated through 90 degrees in assembling the fluid controller 1 and the handle lock device 11, the handle 3 can be made lockable in the fully open position.

The knob 3a of the handle 3 has a generally rectangular shape when seen from above according to the embodiment described above, whereas a handle lock device can be provided similarly even if the handle knob 3a is shaped otherwise unless the knob has a completely cylindrical shape.

### INDUSTRIAL APPLICABILITY

The present invention can be embodied as a device for locking the channel opening-closing handle of fluid controllers, such as shutoff valves for use in semiconductor manufacturing apparatus, in its fully opening or closing position. The device provided comprises a stopper in the from of a single member and is reduced in the number of components and easy to mount on the controller.

## Claims

1. A lock device for a channel opening-closing handle of a fluid controller, the lock device comprising a stopper support member (12) fixed to a controller body (2) and a stopper (13) supported by the support member (12) and upwardly or downwardly movable between a locking position for restraining the handle (3) having a flat knob (3a) by engagement with the handle (3) and an unlocking position permitting the turn of the handle, the lock device being **characterized in that** the controller body (2) has a rectangular parallelepipedal portion (4), a projecting cylinder (7) provided on an upper wall of the parallelepipedal portion (4) and having the handle (3) removably attached to an upper end thereof, and a male screw portion (8) provided around the cylinder (7), the support member (12) having a rectangular plate (15) provided with a circular through hole (16) for the cylinder (7) of the controller body (2) to be fittingly inserted therethrough, a downward projection (17) provided at lengthwise one end of the rectangular plate (15) and held in contact with one side wall of the parallelepipedal portion (4) of the controller body (2), and an extension (15a) extending outward from the plate (15) beyond the parallelepipedal portion (4), the stopper (13) being in the form of a vertical plate and upwardly or downwardly movably inserted through a hole (18) formed in the extension (15a) of the support member (12), the stopper (13) having a contact portion (19) movable into contact with the knob (3a) of the handle (3) from outside widthwise of the knob when the stopper is in the locking position and a lock attaching portion (20) positioned above the support member (12) when the stopper is in the locking position.
